# EUROPEAN PATENT SPECIFICATION

(11) **EP 0 775 550 B1**
(45) Date of publication and mention of the grant of the patent: **07.02.2001**
(21) Application number: 96118694.7
(22) Date of filing: 21.11.1996
(51) Int. Cl.: B23P 15/24, B29C 67/00, B21D 37/20

(54) **Method of fabricating metal mold comprised of laminated thin metal plates**
Herstellungsverfahren für aus laminierten dünnen Metallplatten bestehenden Metallformen
Procédé de fabrication de moules métalliques constitués par de minces plaques métalliques laminées

(30) Priority: 24.11.1995 JP 30600495
(43) Date of publication of application: 28.05.1997
(73) Proprietor: The Institute of Physical and Chemical Research ( RIKEN), Wako-shi, Saitama 351-01 (JP)
(72) Inventor: Nakagawa, Takeo, Wako-shi, Saitama, 351-01 (JP)
(74) Representative: Grünecker, Kinkeldey, Stockmair & Schwanhäusser Anwaltssozietät

(56) References cited:
- WO-A-90/03893
- WO-A-96/11117
- DE-A- 4 135 971
- US-A- 5 031 483
- US-A- 5 071 503
- NAKAGAWA T ET AL: "LASER CUT SHEET LAMINATED FORMING DIES BY DIFFUSION BONDING" 22 April 1985 , PROCEEDINGS OF THE INTERNATIONAL MACHINE TOOL DESIGN AND RESEARCH CONFERENCE, PAGE(S) 505 - 510 XP000603191 * the whole document *

## Description

The present invention relates to methods of fabricating a metal mold comprised of lamination of a plurality of thin metal plates of the type as recited in the preamble portions of claims 1 and 8. Methods of this kind are known from US-A-5031483.

In product manufacturing, reduction in fabrication cost and improvement in quality are eternal targets.. In addition, it is also important to shorten a period of time for developing new products because of rapid progress in technology, shortened life-time of products, and smaller volume production for a greater number of products.

Most mechanical parts are made of a solid single-piece material, and hence, shortening a lead time for developing solid single-piece material is a key point for shortening a period of time for development of products. The solid single-piece material is characterized by that a product having a complicated structure can be mass-produced with high efficiency by means of a metal mold. However, a problem is that fabrication of a metal mold takes relatively long time.

A metal mold has conventionally been manufactured by cutting process. Recently, there has appeared a variety of novel technologies such as design of a metal mold by means of computer aided design (CAD), molding simulation by means of CAD, automatic processing by means of CAD/CAM, high efficiency processing by means of high rate cutting and/or electric discharge, automatic finishing by mirror polishing or automatic polishing, automatic inspection of a metal mold by means of three-dimensional measuring device, and a trial molding machine with high performance, all of which have contributed to shortening of a lead time for developing products. However, in conventional methods in which a starting material is cut to thereby fabricate a metal mold, a metal material has to be gradually cut with a cutting device. Thus, even if other steps were shortened in time, a metal mold took much time to fabricate. In addition, though unmanned operation by means of CAD/CAM has been recently spread widely, it still takes too much time and manpower for developing a numerical control (NC) program to be used for operating various processing machines.

One of solutions to the above mentioned problems is a concept of a metal mold comprised of laminated thin metal plates. Specifically, by assuming that a three-dimensional metal mold is comprised of lamination of thin metal plates having different shapes, a metal mold is fabricated by stacking thin metal plates having been precision investment cut by means of laser. This is one of lamination moldings which are called rapid proto-typing, and is just opposite to a concept of fabricating a metal mold by cutting a starting material, in other words, by removing unnecessary portions in a starting material. This concept was first suggested more than ten years ago by Tokyo University, Production Technology Laboratory, Professor Nakagawa's office, and has been used by some private companies.

On the other hand, there has been developed and researched fabrication of a metal mold by lamination molding which is called rapid tooling. This aims shortening a lead time by using lamination molding such as optical molding which has been recently widely used. The lamination molding includes three types: (a) conversion of resin model formed by usual lamination molding into a metal mold by accurate casting; (b) infiltration of metal powder model with copper; and (c) direct formation of metal powder sintered body. Among these three types, the type (a) includes a casting step, which would deteriorate accuracy. Thus, the type (a) is not suitable for application to a metal mold except a small one. The types (b) and (c) have problems that they have to have an infiltration step and are not suitable for a large-sized metal mold.

A sheet lamination process, which is one of rapid proto typing processes, is originated from the above mentioned metal mold comprised of laminated thin metal plates, and is a system in which supply, bonding and cutting of sheets are completely automated. By combining a concept of the above mentioned sheet lamination process, as one of rapid proto typing processes, where sheets made of resin or paper are to be used, and the metal mold comprised of laminated thin metal plates, a new system for automatically fabricating a metal mold is expected to be born. The above mentioned metal mold comprised of laminated thin metal plates has been proved to be practical for formation of a shallow shaped thin plate by pressing. In addition, the system for automatically fabricating a metal mold has been proved to be practical by a model made of thin resin and papers.

Under the above mentioned circumstances, the inventor intends to provide a method of fabricating a metal mold comprised of lamination of thin metal plates, which method would be suitable for a system for automatically fabricating a metal mold by stacking a plurality of thin metal plates. Hereinbelow will be described problems in accomplishing the method.

### A. Formation of three-dimensional CAD solid model in designing a metal mold.

In the method in accordance with the present invention, two-dimensional slice data is obtained from three-dimensional CAD data, and then metal plates are cut according to the slice data. A software for doing so has already been completed, and is used in a variety of rapid proto typing. A problem at present is that a metal mold design is not always three-dimensional. However, three-dimensional solid model is now being developed in the general situation, and thus a three-dimensional design of a metal mold can be accomplished in the quite near future. Hence, three-dimensional CAD in a metal mold design can be accomplished based on conventional technologies.

### B. Method of bonding thin metal plates.

It is one of big problems to bond thin metal plates to each other with the metal plates being stacked. It is said that this problem can be overcome by fastening metal plates with bolts or caulking metal plates in press-type metal molding. However, there remains probability that there arises a trouble when a molded product is pulled out of metal molds having a deep cavity. Thus, it is necessary to find a method of bonding thin metal plates to each other more firmly and perfectly.

As a perfect method of bonding thin metal plates to each other, there is a diffusion bonding method, which, however, requires a large-scaled machine, and takes too much time for bonding. In addition, it is also a problem from the standpoint of automatic fabrication that bonding thin metal plates to each other has to be carried out by another machine after stacking metal plates. Thus, it is necessary to find a method of readily bonding metal plates to each other which method enables automatic bonding with requisite bonding strength.

### C. Automation in stacking thin metal plates.

In conventional formation of a metal mold comprised thin laser-cut metal plates, metal plates have been manually stacked. On the other hand, in rapid proto typing where sheets made of resin or paper are to be stacked, cutting and stacking metal plates are completely automated. In addition, bonding metal plates to each other is also automated, which makes the rapid proto typing process to be a completed process. Similarly to the rapid proto typing process, it is necessary in the present invention to automate stacking and bonding metal plates to thereby automate the overall system.

In the rapid proto typing, the thin metal plates are stacked and bonded to each other one by one, and then only an uppermost metal plate is cut. Laser or a knife blade is used for cutting only an uppermost metal plate. However, it is difficult in general that only an uppermost metal plate is cut with other metal plates being stacked, and hence it is necessary to develop cutting technique for cutting only an uppermost metal plate.

In particular, in thermally cutting metal plates, it is very important to prevent metal plates from melting and bonding to each other while a metal plate is being cut with other metal plates being stacked. Another process such as mechanically cutting may be adopted. As an alternative, thin metal plates which have been already cut may be stacked one on another, in which case, however, it is necessary to establish a technique by which burr is not be produced, or it is necessary for metal plates to go through a burr removing step after being cut and before being stacked and bonded. At any rate, it is necessary to adopt the most advantageous system, which could overcome a problem of steps to be formed between thin metal plates.

### D. Removal of steps on a surface of a metal mold.

In a model comprised of lamination of sheets made of resin or paper, steps formed on a surface of the model can be readily, manually removed with an emery paper, because resin and paper are soft. On the contrary, in a model comprised of lamination of metal plates, it would take much labor to manually remove such steps. In addition, a device such as a grinder has to be used for removal of the steps. If a metal mold is to be fabricated by cutting a starting material, cutting technique for decreasing the number of steps should be taken or cutting for removal steps should be carried out.

### E. Accuracy in a thickness of a metal mold comprised of lamination of thin metal plates.

Metal flat plates have a dispersion in thickness, even if they are strictly selected. Though a single thin metal plate has a quite small dispersion, a lot of thin metal plates would make a large dispersion. In addition, a small burr or a raised portion formed during welding would make an error in thickness of a metal plate. In order to solve these problems, it is necessary to optimize cutting conditions to minimize causes for generating such errors, and also necessary to establish a system for measuring a thickness of a metal mold and feeding the thus measured data back to slice data. It may be necessary to measure a thickness of a metal mold under pressure.

### SUMMARY OF THE INVENTION

It is an object of the present invention to provide an improved method of fabricating a metal mold comprised of lamination of a plurality of thin metal plates. In particular, the inventive method should be capable of providing requisite strength by simple bonding, automatic stacking and bonding metal plates, readily removing steps formed on a surface of a metal mold, and should enhance accuracy of a thickness of a completed metal mold.

The above object is achieved by the subject matters of claims 1 as well as of claim 8. Preferred embodiments of the inventive methods are defined in the depending subclaims.

The above and other objects and advantageous features of the present invention will be made apparent from the following description made with reference to the accompanying drawings, in which like reference characters designate the same or similar parts throughout the drawings.

### BRIEF DESCRIPTION OF THE DRAWINGS

Fig. 1 is a flow chart of the first embodiment in accordance with the inventive method of fabricating a metal mold comprised of a plurality of stacked thin metal plates.

Fig. 2A is a cross-sectional view of a metal mold fabricated in accordance with the first and second embodiments of the present invention.

Fig. 2B is an enlarged view illustrating a single metal plate having portion to be cut away.

Fig. 3 is a flow chart of the second embodiment in accordance with the present invention.

Fig. 4 is a flow chart of the third embodiment in accordance with the present invention.

Fig. 5A is a cross-sectional view of a metal mold fabricated in accordance with the third embodiment of the present invention.

Fig. 5B is an enlarged view illustrating a single metal plate having a portion to be cut away.

Fig. 6 is a schematic view showing how a stack of metal plates is cut.

### DESCRIPTION OF THE PREFERRED EMBODIMENTS

Preferred embodiments in accordance with the present invention will be explained hereinbelow with reference to drawings.

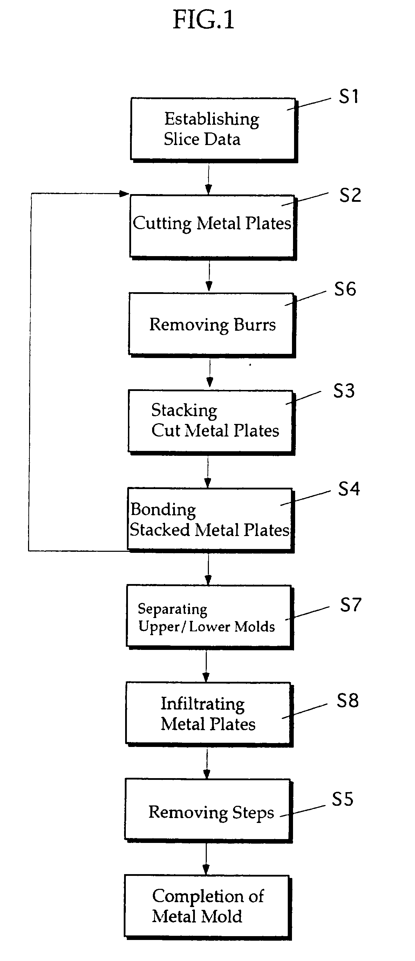

With reference to Fig. 1, hereinbelow is explained the first embodiment in accordance with the inventive method of fabricating a metal mold comprised of a plurality of stacked thin metal plates. As shown in Fig. 1, the method includes the step 1 of obtaining slice data for each of thin metal plates on the basis of three-dimensional CAD data; the step 2 of cutting a plurality of thin metal plates one by one with accuracy, the step 3 of stacking the thus cut thin metal plates, the step 4 of bonding the thus stacked thin metal plates to one another, and the step 5 of removing steps having been formed between the thin metal plates. Between the steps 2 and 3 is carried out the step 6 of removing burrs having been formed at cutting edges of the thin metal plates prior to stacking the cut metal plates. In addition, the step 7 of separating upper and lower molds from each other is carried out just after the step 4, and the step 8 of infiltrating the thin metal plates is carried out between the steps 7 and 5. The steps 2, 6, 3 and 4 are carried out for each of the thin metal plates.

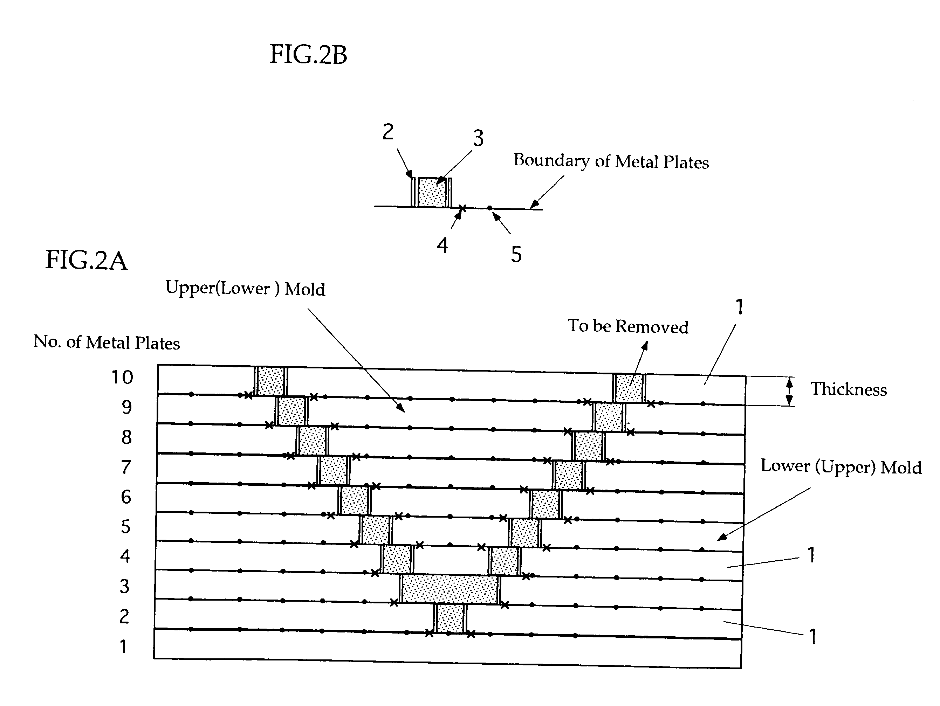

Fig. 2A is a cross-sectional view of a metal mold fabricated in accordance with the first embodiment. In the first embodiment, ten thin metal plates 1 are stacked one on another. Each of the thin metal plates 1 are to be cut at cutting sections 2, and a scrap portion 3 interposed between the cutting sections 2 are to be taken away. Each of the thin metal plates 1 is bonded to adjacent metal plates 1 by both closest spot welding 4 and spot welding 5.

Each of the thin metal plates 1 is cut by means of laser, plasma, milling or a combination thereof. Hereinbelow will be explained a case where the thin metal plates 1 are cut by means of laser or plasma. While the thin metal plates 1 are being cut, the thin metal plates 1 may be pressurized in order to avoid the metal plates 1 from being risen.

With reference to Figs. 1, 2A and 2B, among slice data obtained from three-dimensional CAD data in the step 1, there is used data about contour of the thin metal plates 1 to thereby precisely cut the thin metal plates 1 by means of laser in the step 2. Plasma may be substituted for laser. If burrs and dross are formed at the cutting section 2 of the metal plates 1, a conventional method is carried out for removing them in the step 6 in order to keep accuracy in a total thickness of the stacked thin metal plates 1. Then, the thin metal plates 1 having been cut with laser or plasma are stacked one on another in the step 3. Each of the thin metal plates 1 may be formed with a hole or cutout when cut with laser or plasma in order to enhance accuracy in relative positional relationship between the adjacent metal plates 1. The formation of such a hole or cutout ensures that each of the metal plates 1 are precisely positioned, when the thin metal plates 1 are stacked one on another.

When upper and lower molds are to be simultaneously formed, the thin metal plates 1 are cut so that a portion constituting an upper mold, a portion constituting a lower mold and a portion constituting a cavity are not completely separated from one another, but partially connected with one another. If connecting portions for connecting the three portions with one another cannot be readily cut away in the separation step 7, it is necessary to prepare a separation program such as drilling for separating the three portions from one another. When a hollow portion is to be formed, the metal plates 1 having been already cut may be stacked after removal of the scrap portions 3, in which case, a part of the scrap portion is left not to be removed, if necessary, for positioning the thin metal plates 1 in place.

In the step 4, the stacked thin metal plates 1 are welded with one another by means of either a laser processing machine which has been used for cutting the metal plates 1 or another laser processing machine having different functions. The metal plates 1 are welded in spot welding by laser, seam welding, or a combination thereof. In order to avoid the thin metal plates 1 from being risen, the thin metal plates 1 are kept under pressure. The spot welding 5 is carried out densely in the vicinity of the contour of the thin metal plates 1, and roughly at the other sites. It is preferable that the spot welding 5 is carried out at offset positions between the adjacent thin metal plates 1. The seam welding may be carried out at the contour of the metal plates 1 in order to completely weld the adjacent metal plates 1 with each other. After cutting, stacking and welding have been carried out, the stacked thin metal plates 1 make a rectangular parallelepiped block. A guide post portion and a part of a cavity portion may be hollow, and there may be formed some hollow portions for reducing the weight of the block. The block may be drilled, if necessary, to thereby separate upper and lower molds from each other, and the cavity portion and hollow portions are manually removed.

The thus fabricated metal mold may be infiltrated with copper (Cu), if necessary, in the step 8, to thereby bond the thin metal plates 1 with each other more firmly. Then, steps having been formed on a surface of metal mold are ground by means of a grinder to thereby smooth the surface in the step 5. If necessary, the metal mold is machined, and is assembled with guide posts and cams. Thus, the metal mold is completed.

In the above mentioned method, both upper and lower metal molds are fabricated at the same time, however, it should be noted that only one of them can be fabricated. Though much material is left unused, the cutting step 2, the stacking step 3 and the welding step 4 can be made simpler, and in addition, the separation step 7 can be omitted.

It is possible to fabricate metal parts and metal models by the above mentioned method, in which case, a peripheral portion of a part makes the scrap portion 3, and thus it is necessary to make breaks by laser in order to be able to readily remove the peripheral portion.

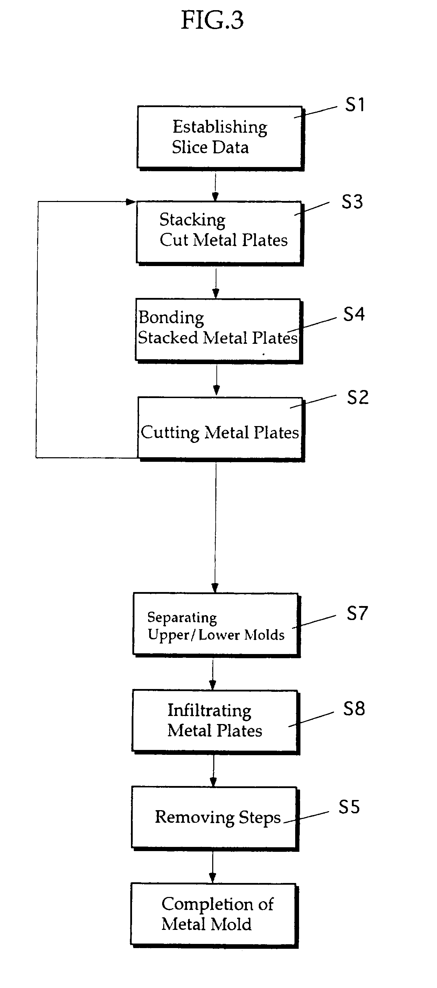

With reference to Fig. 3, hereinbelow is explained the second embodiment in accordance with the inventive method of fabricating a metal mold comprised of a plurality of stacked thin metal plates. As shown in Fig. 3, the method includes the step 1 of obtaining slice data for each of a plurality of thin metal plates on the basis of three-dimensional CAD data, the step 3 of stacking the thin metal plates, the step 4 of bonding the thus stacked thin metal plates to one another, the step 2 of cutting the thin metal plates one by one with accuracy, and the step 5 of removing steps having been formed between the thin metal plates. The step 7 of separating upper and lower molds from each other is carried out just after the step 2, and the step 8 of infiltrating the thin metal plates is carried out subsequently to the step 7. The steps 3, 4 and 2 are carried out for each of the thin metal plates.

In the above mentioned second embodiment, a plurality of the thin metal plates which have been cut into a predetermined shape in advance are stacked one by one in the step 1, and then the thin metal plate are welded with an uppermost metal layer being stacked in the step 4. Then, only the thin metal plate situated uppermost is cut in the step 2. Though a thin metal plate situated below the uppermost thin metal plate might be slightly damaged, it is not a problem. An advantage provided by the second embodiment is to be able to avoid dross from being generated when the thin metal plates are cut with laser, and hence eliminate step of removing dross. Accordingly, the step 6 of removing burrs formed at cutting edges of the thin metal plates can be eliminated unlike the first embodiment illustrated in Fig. 1. In this embodiment, in the case hollow parts are manufactured in automatic, the scrap portion 3 should be removed with vacuum machine or in later step.

In the second embodiment, since a first thin metal plate keeps in direct contact with a second thin metal plate situated just below the first thin metal plate, the first thin metal plate may not be smoothly cut by laser. In addition, the first thin metal plate may be melted during being cut with laser, and thus may be bonded to the second thin metal plate. As a countermeasure for the latter problem, it is preferable to select a metal which is difficult to bond to another, or apply a specific film to a surface of thin metal plates or carry out surface treatment to thin metal plates so that the thin metal plates are unlikely to bond to each other.

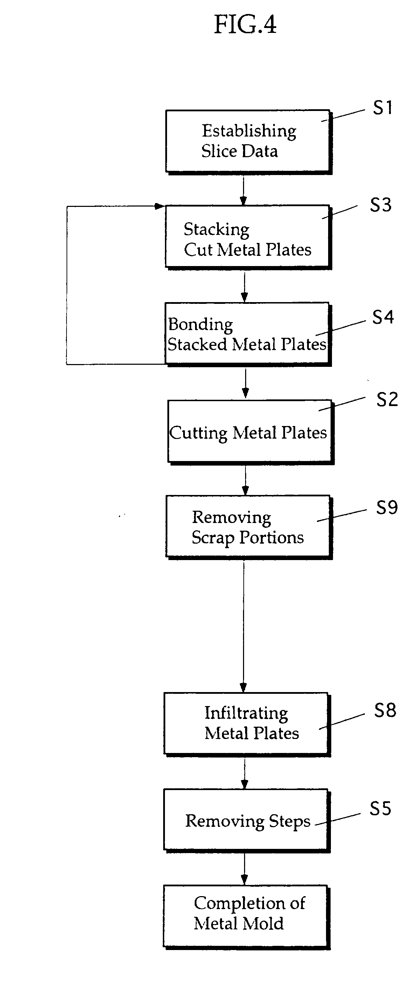

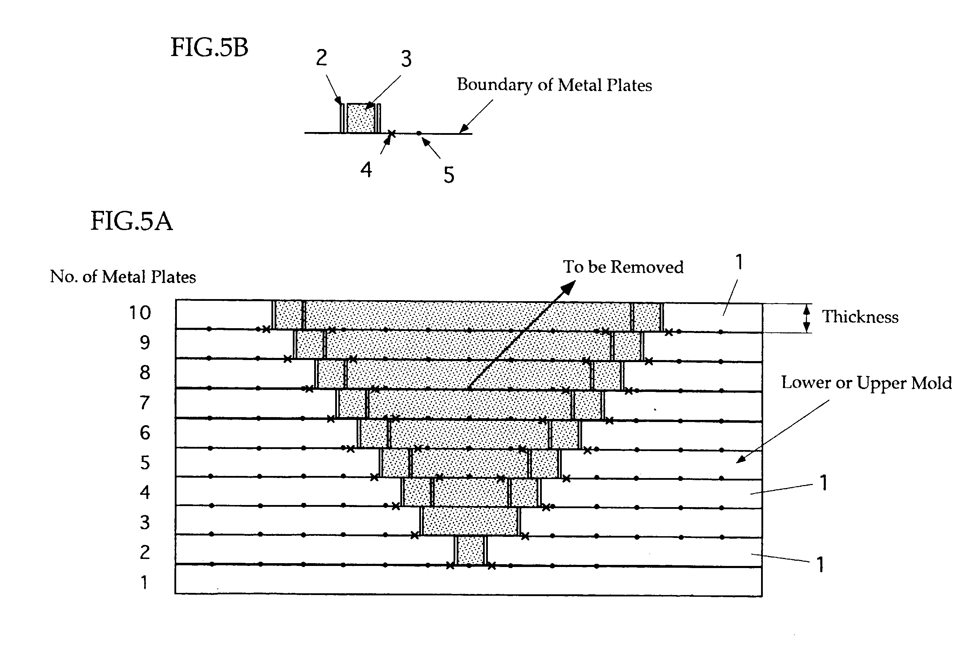

With reference to Figs. 4, 5A and 5B, hereinbelow is explained the third embodiment in accordance with the inventive method of fabricating a metal mold comprised of a plurality of stacked thin metal plates. As shown in Fig. 4, the method includes the step 1 of obtaining slice data for each of a plurality of thin metal plates on the basis of three-dimensional CAD data, the step 3 of stacking the thin metal plates, the step 4 of bonding the thus stacked thin metal plates to one another, the step 2 of cutting the thin metal plates one by one with accuracy, the step 5 of removing steps having been formed between the thin metal plates, the step 9 of removing unnecessary portions generated by cutting the thin metal plates, and the step 8 of infiltrating the thin metal plates. The steps 3 and 4 are carried out for each of the thin metal plates.

Fig. 5A is a cross-sectional view of a metal mold fabricated in accordance with the third embodiment, and Fig. 5B is an enlarged view illustrating a single thin metal plate having a portion to be cut away. With reference to Figs. 5A, 5B and 4, in the third embodiment, thin metal plates 1 which have been cut into a predetermined shape are stacked one by one in the step 3, and the thin metal plates 1 are welded to each other in the step 4. Until the stacked thin metal plates reaches a certain thickness, the steps 3 and 4 are repeated to thereby obtain a block comprised of lamination of the thin metal plates 1. Then, similarly to the second embodiment, the thin metal plates 1 are cut one by one in the step 2 starting from one situated uppermost. Then, unnecessary portions or scrap portions are removed in the step 9, and thus there is completed a metal mold. The unnecessary portions or scrap portions are removed with a vacuum machine and/or or magnets. It should be noted that both of upper and lower metal molds cannot be formed at a time, but only one of them can be formed by the third embodiment.

In the above mentioned preferred embodiments, the thin metal plates are cut with laser or plasma. Hereinbelow is explained other cutting techniques.

### A. Cutting with a small diameter flat end mill

A small-diameter flat end mill may be used in place of laser or plasma in the step of cutting the thin metal plates. The other steps remain the same as those of the first embodiment illustrated in Figs. 1, 2A and 2B. Narrow cavity portions and hollow portions can be formed by grinding the thin metal plates as well as by cutting the thin metal plates. When a small diameter tool is to be used to grind those portions, it is not possible to make a cut width small as laser cut, and thus, upper and lower metal molds may have to be formed with some interval being kept between the molds. In such a case, CAD data for upper and lower metal molds are adjusted accordingly. In grinding the thin metal plates for forming cavities and hollow portions, it is necessary to prevent generation of burrs, because they cause an error when a thickness of the stacked thin metal plates is measured. However, if it is impossible to avoid generation of burrs, a step of removing burrs such as the above mentioned step 6 should be added.

### B. Using a small diameter flat end mill after stacking and bonding thin metal plates

A small diameter flat end mill is used in place of laser in the step of cutting the thin metal plates. The other steps remain the same as those of the second embodiment shown in Figs. 3, 2A and 2B. Narrow cavity portions and hollow portions can be formed by grinding the thin metal plates as well as by cutting the thin metal plates. In grinding the thin metal plates, it is necessary to avoid generation of burrs on an upper surface of the thin metal plates, and not to leave chips.

### C. Cutting a block comprised of stacked and bonded thin metal plates

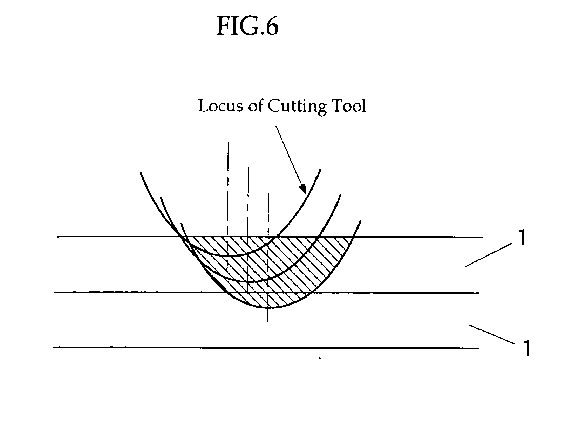

A small diameter end mill is used in place of laser for cutting the thin metal plates. This process is almost the same as the third embodiment shown in Figs. 4, 5A and 5B. If a ball end mill would be used, a problem of generation of steps on a surface of the block could be solved, and thus it would be possible for a metal mold to have a flatter surface. As schematically shown in Fig. 6, a thickness of the thin metal plate 1 is not always necessary to be equal to a cut depth of a cutting tool. Hence, it is possible to use a thick metal plate, which could shorten a period of time for carrying out the step of welding the thin metal plates to each other.

### D. Cutting thin metal plates one by one with a ball end mill

In the above mentioned second embodiment shown in Fig. 3, a ball end mill may be used in place of a flat end mill for cutting the thin metal plates. Namely, the thin metal plates are cut with a ball end mill after having been stacked and bonded to each other. Unnecessary portions may be removed each time, or may be removed after once left as they are. Though one of upper and lower metal molds can be formed because of the use of a ball end mill, the height of steps can be significantly reduced and a cut of depth can be made smaller than a thickness of a thin metal plate. Thus, it is possible to use thick metal plates, which could remarkably shorten a period of time of the step of welding thin metal plates to each other.

### E. Combination of laser and milling

In the above mentioned techniques A to D, it is preferable to add the step of cutting the thin metal plates after the unnecessary scrap portions 3 have been removed by cutting the thin metal plates with laser just before cutting the thin metal plates with a milling machine. As a tool to be used in this technique, a ball end mill is suitable, because it can enhance flatness of a surface of the thin metal plates. The use of laser and milling in combination decreases resistance acting on a cutting tool, and hence, it is possible to carry out higher speed feed with a smaller diameter tool.

### F. Combination of laser and cutting

In the first to third embodiments shown in Figs. 1 to 5B, a laser processing machine and a plasma generator are used to thereby form a metal mold. If cutting and welding of the thin metal plates can be carried out with a single light source, it is possible to form a metal mold by feeding a thin metal plate or stacked thin metal plates into a single machine.

When two light sources are to be used for carrying out the cutting and welding steps, two laser processing machines are connected in series, or two light sources are provided to a single laser processing machine. If a step of removing burrs or dross is to be carried out, two light sources are equipped within or set aside a laser processing machine, and burrs are removed while a next thin metal plate is being cut. At any rate, it is possible to automatically carry out the steps of cutting, stacking and welding (bonding), and it is also possible to automatically carry out the step of removing burrs as well as the above mentioned main three steps.

When the thin metal plates are to be cut with a cutting tool such as an end mill, it would be better to use a single machine having functions of laser emitting and cutting than using both a laser processing machine and a cutting machine. For instance, by adding a laser processing head to a commercially available cutting machine such as a numerical control slice and a machining center, various functions of a numerical control processor can be adequately utilized. For instance, it is possible to carry out position control and high speed feed in a Z-axis direction, and also carry out high speed feed in X- and Y-axes directions. In addition, a variety of NC functions can be used, in which case, it would be preferable that a table is fixed and a spindle is movable at high speed in X-, Y- and Z-axes directions. A table may be designed to be movable only in a Z-axis direction. It is preferable that thin metal plate feed can be carried out at supersonic speed in X- and Y- directions during spot welding of the thin metal plates. To this end, it is preferable to use a linear drive shaft.

Table 1 shows the relationship between the above mentioned first to third embodiments and the cutting techniques.

**[Table 1]**

| | Laser or Plasma | Milling | |
|---|---|---|---|
| | | Flat End Mill | Ball End Mill |
| First Embodiment | ○ | ○ | ― |
| Second Embodiment | ○ | ○ | ○ |
| Third Embodiment | ○ | ― | ○ |
| (○: Applicable) | | | |

As is obvious in Table 1, laser, plasma and a flat end mill are applicable to the first embodiment, a ball end mill as well as those is further applicable to the second embodiment, and laser, plasma and a ball end mill are applicable to the third embodiment. In accordance with the second and third embodiments in which a ball end mill is used, the step of removing steps can be eliminated, and it is possible to use thick metal plates.

In accordance with the above mentioned first embodiment, it is possible to form the lamination of thin metal plates which has a shape quite similar to that of a metal mold, only by repeating steps of obtaining slice data for each of thin metal plates from three-dimensional CAD data, cutting the thin metal plates, stacking the thus cut thin metal plates, bonding the stacked thin metal plates to each other, and removing steps formed between the thin metal plates.

The second embodiment provides an advantage, which is not provided by the first embodiment, that it is possible to eliminate a step of removing burrs formed at cutting edges of thin metal plates.

In accordance with the third embodiment, a lamination block is formed by repeating steps of stacking and bonding thin metal plates. Then, the thin metal plates are cut one by one, and unnecessary portions are taken away. Finally, steps having formed on a surface of the lamination block are removed. Thus, a metal mold is formed with high accuracy.

It is possible to have requisite bonding strength by bonding thin metal plates by means of spot welding by laser, seam welding or combination thereof. In addition, it is also possible to automate stacking and bonding thin metal plates by repeating the above mentioned steps of cutting, stacking and bonding thin metal plates. Steps having formed between the thin metal plates can be readily removed after bonding or infiltrating the thin metal plates. Furthermore, it is possible to enhance accuracy in a total thickness of the lamination of the thin metal plates by measuring a thickness of the lamination of thin metal plates each time a thin metal plate is stacked onto the lamination, and feeding data about the thus measured thickness back to the slice data.

In accordance with the present invention, it is possible to obtain necessary strength by simple bonding process, automate laminating thin metal plates and bonding thin metal plates to each other, readily remove steps formed between thin metal plates, and obtain high accuracy in a thickness of stacked thin metal plates.

While the present invention has been described in connection with certain preferred embodiments, it is to be understood that the subject matter encompassed by way of the present invention is not to be limited to those specific embodiments. On the contrary, it is intended for the subject matter of the invention to include all alternatives, modifications and equivalents as can be included within the scope of the following claims.

## Claims

1. A method of fabricating a metal mold comprised of lamination of a plurality of thin metal plates, comprising the steps of, in sequence:
a) obtaining slice data on a thickness for each of thin metal plates on the basis of three-dimensional CAD data;
b) cutting said thin metal plates one by one;
c) stacking the thus cut thin metal plates one on another;
d) bonding the thus stacked thin metal plates to one another; and removing steps formed between said thin metal plates,
**characterized by** the steps of measuring a thickness of the stacked thin metal plates each time said thin metal plates are bonded to each other; and feeding the thus measured thickness back to said slice data.

2. The method as set forth in claim 1 further comprising the step of (f) removing burr formed at cutting edges of said thin metal plates, said step (f) being to be carried out between said steps (b) and (c).

3. The method as set forth in claim 1, wherein said thin metal plates are cut in said step (b) by means of one of laser, plasma and milling, or a combination thereof.

4. The method as set forth in claim 1, wherein said metals are bonded to each other in said step (d) by means of one of spot welding by laser and seam welding, or a combination thereof.

5. The method as set forth in claim 1 further comprising the step of applying separating agent to said thin metal plates to prevent said thin metal plates from being melted and stuck to other thin metal plates during being cut, said step being to be carried prior to said step (d).

6. The method as set forth in claim 1 further comprising the step of plating said thin metal plates with separating agent to prevent said thin metal plates from being melted and stuck to other thin metal plates during being cut, said step being to be carried prior to said step (d).

7. The method as set forth in claim 1 further comprising the step of interposing foil-like separating material between said thin metal plates to prevent said thin metal plates from being melted and stuck to other thin metal plates during being cut, said step being to be carried prior to said step (d).

8. A method of fabricating a metal mold comprised of lamination of a plurality of thin metal plates, comprising the steps of, in sequence:
a) obtaining slice data on a thickness for each of thin metal plates on the basis of three-dimensional CAD data;
b) stacking said thin metal plates one on another;
c) bonding the thus stacked thin metal plates to one another to form a block and removing steps formed between said thin metal plates comprised of lamination of a plurality of thin metal plates,
**characterized by the steps of**:
d) cutting said thin metal plates one by one starting from one situated uppermost of said stuck thin metal plates to others situated below said uppermost one;
e) removing successively unnecessary portions of said thin metal plates;
f) measuring a thickness of said block each time said thin metal plates are bonded to each other; and
g) feeding the thus measured thickness back to said slice data.

9. The method as set forth in claim 8 further comprising the step of infiltrating said block with soldering liquid, said step being to be carried out prior to said step (f).

10. The method as set forth in claim 9 further comprising the steps of:
a) applying separating agent to said thin metal plates; and
b) heating said thin metal plates to bond each other in said step (c).

11. The method as set forth in claim 9 further comprising the steps of:
a) plating said thin metal plates with separating agent; and
b) heating said thin metal plates to bond each other in said step (c).

12. The method as set forth in claim 9 further comprising the steps of:
a) interposing foil-like separating material between said thin metal plates; and
b) heating said thin metal plates to bond each other in said step (c).

## Patentansprüche

1. Verfahren zum Herstellen einer Metallform, die aus einer Schichtung einer Vielzahl dünner Metallplatten besteht, das der Reihe nach die folgenden Schritte umfasst:
a) Bestimmen von Schichtdaten über eine Dicke für jede der dünnen Metallplatten auf der Basis dreidimensionaler CAD-Daten;
b) Schneiden der dünnen Metallplatten nacheinander;
c) Übereinanderschichten der so geschnittenen dünnen Metallplatten;
d) Verbinden der so geschichteten dünnen Metallplatten miteinander; und
Entfernen von zwischen den dünnen Metallplatten ausgebildeten Absätzen,
**gekennzeichnet durch** die Schritte des Messens einer Dicke der geschichteten dünnen Metallplatten immer dann, wenn die dünnen Metallplatten miteinander verbunden werden; und
Zurückführen der so gemessenen Dicke zu den Schichtdaten.

2. Verfahren nach Anspruch 1, das des Weiteren den Schritt (f) des Entfernens von an Schneidkanten der dünnen Metallplatten ausgebildeten Graten umfasst, wobei der Schritt (f) zwischen den Schritten (b) und (c) ausgeführt wird.

3. Verfahren nach Anspruch 1, wobei die dünnen Metallplatten in dem Schritt (b) mittels Laser, Plasma oder Fräsen oder einer Kombination derselben geschnitten werden.

4. Verfahren nach Anspruch 1, wobei die Metalle in dem Schritt (d) mittels Punktschweißen mit Laser oder Nahtschweißen oder einer Kombination derselben miteinander verbunden werden.

5. Verfahren nach Anspruch 1, das des Weiteren den Schritt des Auftragens von Trennmittel auf die dünnen Metallplatten umfasst, um zu verhindern, dass die dünnen Metallplatten, während sie geschnitten werden, zum Schmelzen gebracht werden und an anderen dünnen Metallplatten haften, wobei der Schritt vor dem Schritt (d) ausgeführt wird.

6. Verfahren nach Anspruch 1, das des Weiteren den Schritt des Plattierens der dünnen Metallplatten mit Trennmittel umfasst, um zu verhindern, dass die dünnen Metallplatten, während sie geschnitten werden, zum Schmelzen gebracht werden und an anderen dünnen Metallplatten haften, wobei der Schritt vor dem Schritt (d) ausgeführt wird.

7. Verfahren nach Anspruch 1, das des Weiteren den Schritt des Anordnens von folieartigem Trennmaterial zwischen den dünnen Metallplatten umfasst, um zu verhindern, dass die dünnen Metallplatten, während sie geschnitten werden, zum Schmelzen gebracht werden und an anderen dünnen Metallplatten haften, wobei der Schritt vor dem Schritt (d) ausgeführt wird.

8. Verfahren zum Herstellen einer Metallform, die aus einer Schichtung einer Vielzahl dünner Metallplatten besteht, das der Reihe nach die folgenden Schritte umfasst:
a) Bestimmen von Schichtdaten über eine Dicke für jede der dünnen Metallplatten auf der Basis dreidimensionaler CAD-Daten;
b) Übereinanderschichten der dünnen Metallplatten;
c) Verbinden der so geschichteten dünnen Metallplatten miteinander, um einen Block herzustellen, und Entfernen von zwischen den dünnen Metallplatten, die aus einer Schichtung einer Vielzahl dünner Metallplatten bestehen, ausgebildeten Absätzen,
**gekennzeichnet durch** die folgenden Schritte:
d) Schneiden der dünnen Metallplatten nacheinander von einer am weitesten oben angeordneten der dünnen Metallplatten ausgehend zu anderen hin, die sich unter der obersten befinden;
e) nachfolgendes Entfernen unnötiger Abschnitte der dünnen Metallplatten;
f) Messen einer Dicke des Blocks immer dann, wenn die dünnen Metallplatten miteinander verbunden werden; und
g) Zurückführen der so gemessenen Dicke zu den Schichtdaten.

9. Verfahren nach Anspruch 8, das des Weiteren den Schritt des Tränkens des Blocks mit Lötflüssigkeit umfasst, wobei der Schritt vor dem Schritt (f) ausgeführt wird.

10. Verfahren nach Anspruch 9, das des Weiteren die folgenden Schritte umfasst:
a) Auftragen von Trennmittel auf die dünnen Metallplatten; und
b) Erhitzen der dünnen Metallplatten, um sie miteinander zu verbinden, in Schritt (c).

11. Verfahren nach Anspruch 9, das des Weiteren die folgenden Schritte umfasst:
a) Plattieren der dünnen Metallplatten mit Trennmittel; und
b) Erhitzen der dünnen Metallplatten, um sie miteinander zu verbinden, in Schritt (c).

12. Verfahren nach Anspruch 9, das des Weiteren die folgenden Schritte umfasst:
a) Anordnen von folieartigem Trennmaterial zwischen den dünnen Metallplatten; und
b) Erhitzen der dünnen Metallplatten, um sie miteinander zu verbinden, in Schritt (c).

## Revendications

1. Procédé de fabrication d'un moule métallique constitué d'un stratifié de plusieurs minces plaques métalliques, comportant les étapes consistant à, en séquence :
a) obtenir des données de tranche concernant l'épaisseur de chacune des minces plaques métalliques, sur la base de données tridimensionnelles de Conception Assistée par Ordinateur (CAO) ,
b) découper lesdites minces plaques métalliques une par une,
c) empiler les minces plaques métalliques ainsi découpées les unes sur les autres,
d) fixer les minces plaques métalliques ainsi empilées les unes aux autres, et enlever les gradins formés entre lesdites minces plaques métalliques,
caractérisé en ce qu'il comporte les étapes consistant à mesurer l'épaisseur des minces plaques métalliques empilées à chaque fois que lesdites minces plaques métalliques sont fixées les unes aux autres, et envoyer l'épaisseur ainsi mesurée en retour vers lesdites données de tranche.

2. Procédé selon la revendication 1, comportant de plus l'étape consistant à (f) enlever les bavures formées au niveau des bords de découpe desdites minces plaques métalliques, ladite étape (f) devant être effectuée entre lesdites étapes (b) et (c).

3. Procédé selon la revendication 1, dans lequel lesdites minces plaques métalliques sont découpées à ladite étape (d) par l'intermédiaire d'un laser, d'un plasma et d'un fraisage, ou d'une combinaison de ceux-ci.

4. Procédé selon la revendication 1, dans lequel lesdites plaques métalliques sont fixées les unes aux autres à ladite étape (d) par l'intermédiaire d'une soudure par point par laser et d'une soudure continue, ou d'une combinaison de celles-ci.

5. Procédé selon la revendication 1, comportant de plus l'étape consistant à appliquer un agent de séparation sur lesdites minces plaques métalliques pour empêcher lesdites minces plaques métalliques de fondre et de coller à d'autres minces plaques métalliques pendant la découpe, ladite étape étant effectuée avant ladite étape (d).

6. Procédé selon la revendication 1, comportant de plus l'étape consistant à revêtir lesdites minces plaques métalliques d'un agent de séparation pour empêcher lesdites minces plaques métalliques de fondre et de coller à d'autres minces plaques métalliques pendant la découpe, ladite étape étant effectuée avant ladite étape (d).

7. Procédé selon la revendication 1, comportant de plus l'étape consistant à interposer un matériau de séparation analogue à un film entre lesdites minces plaques métalliques pour empêcher lesdites minces plaques métalliques de fondre et de coller à d'autres minces plaques métalliques pendant la découpe, ladite étape étant effectuée avant ladite étape (d).

8. Procédé de fabrication d'un moule métallique constitué d'un stratifié de plusieurs minces plaques métalliques, comportant les étapes consistant à, en séquence :
a) obtenir des données de tranche concernant l'épaisseur de chacune des minces plaques métalliques sur la base de données tridimensionnelles de CAO,
b) empiler lesdites minces plaques métalliques les unes sur les autres,
c) fixer les minces plaques métalliques ainsi empilées les unes aux autres pour former un bloc et enlever les gradins formés entre lesdites minces plaques métalliques constituées d'un stratifié de plusieurs minces plaques métalliques,
caractérisé en ce qu'il comporte les étapes consistant à :
d) découper lesdites minces plaques métalliques une par une en démarrant à partir de la plaque la plus haute desdites minces plaques métalliques empilées vers d'autres situées en dessous de ladite plaque la plus haute,
e) enlever successivement les parties inutiles desdites minces plaques métalliques,
f) mesurer l'épaisseur dudit bloc à chaque fois que lesdites minces plaques métalliques sont fixées les unes aux autres, et
g) alimenter l'épaisseur ainsi mesurée en retour vers lesdites données de tranche.

9. Procédé selon la revendication 8, comportant de plus l'étape consistant à infiltrer ledit bloc à l'aide d'un liquide de soudure, ladite étape étant effectuée avant ladite étape (f).

10. Procédé selon la revendication 9, comportant de plus les étapes consistant à :
a) appliquer un agent de séparation sur lesdites minces plaques métalliques, et
b) chauffer lesdites minces plaques métalliques pour les fixer les unes aux autres à ladite étape (c).

11. Procédé selon la revendication 9, comportant de plus les étapes consistant à :
a) revêtir lesdites minces plaques métalliques d'un agent de séparation, et
b) chauffer lesdites minces plaques métalliques pour les fixer les unes aux autres à ladite étape (c).

12. Procédé selon la revendication 9, comportant de plus les étapes consistant à :
a) interposer un matériau de séparation analogue à un film entre lesdites minces plaques métalliques, et
b) chauffer lesdites minces plaques métalliques pour les fixer les unes aux autres à ladite étape (c).
